# EUROPÄISCHE PATENTSCHRIFT

(11) **EP 2 090 350 B1**
(45) Veröffentlichungstag und Bekanntmachung des Hinweises auf die Patenterteilung: **29.05.2013**
(21) Anmeldenummer: 09151056.0
(22) Anmeldetag: 22.01.2009
(51) Int. Cl.: B01D 46/10

(54) **Verfahren und Vorrichtung zur Bestimmung des Abscheidegrades oder zur Durchführung eines Lecktests bei einer Filteranordnung**
Method and device for determining the separation efficiency or carrying out a leak test in a filter assembly
Procédé et dispositif de détermination du degré de séparation ou d'exécution d'un test de fuite dans un dispositif de filtration

(30) Priorität: 12.02.2008 DE 102008008804
(43) Veröffentlichungstag der Anmeldung: 19.08.2009
(73) Patentinhaber: YIT Germany GmbH, 80992 München (DE)
(72) Erfinder: Felser, Hans, 52080, Aachen (DE); Martinsteg, Hans, 52159, Roetgen (DE); Schweinheim, Claus, 50996 Köln (DE)
(74) Vertreter: Bauer, Dirk

(56) Entgegenhaltungen:
- JP-A- 10 206 310
- US-A- 4 494 403
- US-A- 4 683 762

## Beschreibung

### Einleitung

Die Erfindung betrifft ein Verfahren zur Bestimmung eines Abscheidegrades oder zur Durchführung eines Lecktests bei einer Filteranordnung zur Abscheidung von Aerosolen aus einem Gasvolumenstrom, wobei ein Testaerosol mittels eines Aufgabeelements in Strömungsrichtung des Gasvolumenstroms betrachtet vor der Filteranordnung in einen Rohgasstrom aufgegeben wird und eine Messung einer Partikelanzahl und/oder eine Bestimmung der Partikelkonzentration in Strömungsrichtung betrachtet hinter der Filteranordnung in einem Reingasstrom durchgeführt wird, wobei die Messung der Partikelanzahl und/oder die Bestimmung der Partikelkonzentration des Testaerosols mittels eines über einen Querschnitt der Filteranordnung beweglichen Aufnahmeelements für einen Teilvolumenstrom des Reingasstroms erfolgt, wobei das Aufgabeelement für das Testaerosol quer zu der Strömungsrichtung bewegt wird. Darüber hinaus betrifft die Erfindung eine Vorrichtung zur Durchführung des vorgenannten Verfahrens gemäß dem Oberbegriff des Patentanspruchs 6.

### Stand der Technik

Ein bewegliches Aufnahmeelement für einen Reingas-Teilvolumenstrom ist beispielsweise aus der DE 199 23 502 C1 bekannt. Mit dem in dieser Schrift offenbarten Verfahren lassen sich Aussagen über lokale Unterschiede in der Filtereffizienz sowie über eventuelle Undichtigkeiten im Bereich des Dichtsitzes eines Filterelements der Filteranordnung treffen. Die gesamte Rückseite, d.h. Reingasseite, der Filteranordnung wird mittels des Aufnahmeelements quasi "abgescannt", so dass der gesamte Filterquerschnitt auf seine Wirksamkeit hin überprüft werden kann.

Aus der gattungsgemäßen WO 2007/021333 A2 ist eine in einem Filtergehäuse untergebrachte Filteranordnung bekannt, bei der sich eine ringförmige Aufgabeeinrichtung für das Testaerosol in der Nähe einer auf der Einströmseite des Filtergehäuses gelegenen Absperrklappe angeordnet ist. Aufgrund der Notwendigkeit, die Baulänge des Filtergehäuses aus Platzerspamisgründen möglichst klein zu halten, ist der Strömungsweg zwischen der Testaerosol-Aufgabe und dem rohgasseitigen Einströmquerschnitt des Filterelements recht gering. Hieraus ergeben sich Probleme im Hinblick auf die Gleichmäßigkeit der Verteilung des Testaerosols. Bei inhomogener Verteilung des Testaerosols über dem Filterquerschnitt lassen sich jedoch auf der Reingasseite keine hinreichend zuverlässigen Aussagen über die örtliche Filterwirksamkeit treffen. Auch ist eine Abscheidegradbestimmung in diesen Fällen kaum möglich, da verlässliche Angaben über die Konzentration des Testaerosols auf der Rohgasseite nicht möglich sind. Eine Vergrößerung des Abstandes zwischen der Testaerosol-Aufgabe und der Filteranordnung lässt sich aus der vorgenannten Notwendigkeit einer Platz sparenden Bauweise nicht realisieren, so dass eine Vergrößerung der Lauflänge zwischen Testaerosol-Aufgabe und Eintritt in die Filteranordnung kein gangbarer Weg zur Verbesserung der Homogenität der Verteilung des Testaerosols ist.

Aus der US 4,494,403 ist eine Filtertestvorrichtung bekannt, bei der mittels eines Aufgabeelements ein Testaerosol von einer Rohgasseite her auf ein Filterelement der Filtertestvorrichtung aufgebracht wird. Das Aufgabeelement ist von einer einzelnen Düse gebildet, die entlang einer vertikalen sowie einer horizontalen Führungsschiene relativ zum Filterelement verfahren werden kann, so dass sie nach und nach alle Stellen einer Filterfläche des Filterelements abfährt und somit auf dessen Dichtigkeit überprüft. Die Führungsschienen des Aufgabeelements sind an deren Enden verschieblich in einem dafür vorgesehenen Rahmen eingesetzt, der es ermöglicht, dass die Führungsschienen über die gesamte Höhe beziehungsweise die gesamte Breite des Filterelements verfahren werden können. Ein solcher Rahmen zum Verfahren eines Aufgabeelements kann beispielsweise der US 4,683,762 entnommen werden.

Aus der JP10206310 ist eine zum vorstehend beschriebenen Prinzip ähnliche Vorrichtung bekannt, wobei auf einer Reingasseite des Filterelements eine Aufnahmeeinrichtung angeordnet ist. Diese ist dazu geeignet, den von dem Aufgabeelement auf das Filterelement aufgegebenen Teststrom aufzunehmen und den Abscheidegrad des Filterelements zu überprüfen. Das Aufgabeelement auf der Rohgasseite des Filterelements sowie das Aufnahmeelement auf dessen Reingasseite werden hierzu stets simultan verfahren, so dass sie sich auf beiden Seiten des Filterelements gegenüber stehen.

### Aufgabe

Der Erfindung liegt die Aufgabe zugrunde, ein Verfahren und eine Vorrichtung zur Bestimmung des Abscheidegrades oder zur Durchführung eines Lecktests bei einer Filteranordnung zur Abscheidung von Aerosolen aus einem Gasvolumenstrom vorzuschlagen, bei dem genaue Aussagen über die lokale Effizienz des getesteten Filters möglich sind.

### Lösung

Ausgehend von einem Verfahren der eingangs beschriebenen Art wird die Aufgabe dadurch gelöst, dass an mindestens einem Ort in Strömungsrichtung betrachtet hinter dem Aufgabeelement und in Strömungsrichtung betrachtet vor der Filteranordnung ein weiteres Aufnahmeelement angeordnet ist, mittels dessen eine Konzentration c₁ des Testaerosols im Rohgasstrom gemessen wird, wobei in dem Reingasstrom gleichfalls eine Messung einer Konzentration c₂ mittels des Aufnahmeelements des Testaerosols erfolgt, wobei der Abscheidegrad nach der Formel A=1-c₂/c₁ bestimmt wird.

Auf diese Weise kann eine Abscheidegradbestimmung besonders einfach durchgeführt werden. Bei der Auswahl des Ortes zur Messung der Testaerosol-Konzentration c₁ im Rohgas sind keine besonderen Anforderungen im Hinblick auf die Homogenität über den Filterquerschnitt zu beachten. Die Konzentration c₁ wird gemessen, indem das Aufgabeelement sich an einem dem Messort in Strömungsrichtung zugeordneten Position befindet, ohne dass diese Konzentration c₁ zu diesem Zeitpunkt auch an anderen Orten des Filterquerschnitts besteht. Es kann jedoch davon ausgegangen werden, dass bei einer anschließenden Bewegung des Aufgabeelements über den Filterquerschnitt der Rohgasseite die zuvor am Messort bestimmte Konzentration c₁ auch an allen anderen Orten des Filterquerschnitts gegeben ist, so dass gedanklich von einer homogenen Beaufschlagung der gesamten Rohgasseite mit der Konzentration c₁ auszugehen ist, was als Grundlage für die Abscheidegradbestimmung herangezogen wird. Vorteilhafterweise wird an mehreren Orten das Testaerosol aufgegeben, um für diese Orte eine separate Messung der Partikelanzahl und/oder der Partikelkonzentration an den entsprechenden Orten in dem Reingasstrom durchzuführen. Dabei ist es grundsätzlich möglich, dass das Aufgabeelement mit entsprechend großer Geschwindigkeit andauernd bewegt wird, um auf diese Weise eine quasi-homogene Beaufschlagung der Filteranordnung zu erreichen. Die Messung auf der Reingasseite kann in diesem Fall - wie bei den aus dem Stand der Technik bekannten Scanverfahren üblich - zeitlich hintereinander für die verschiedenen Bereiche des Filterquerschnitts durchgeführt werden, um im Ergebnis den gesamten Filterquerschnitt abzuscannen.

Alternativ zu der andauernden Bewegung des Aufgabeelements ist es aber auch möglich, dieses schrittweise über den Filterquerschnitt zu bewegen und die Messung auf der Reingasseite an den jeweils damit in Strömungsrichtung korrespondierenden Orten durchzuführen. Testaerosol-Aufgabe und die Aufnahme des Teilvolumenstroms auf der Reingasseite korrespondieren bei dieser Betriebsweise somit stets zeitlich und örtlich miteinander.

Gemäß einer Ausgestaltung des erfindungsgemäßen Verfahrens wird das Aufgabeelement quer zur Strömungsrichtung verschoben und/oder um eine zur Strömungsrichtung parallele Achse gedreht, wobei während eines Messzyklus der gesamte auf der Rohgasseite befindliche Querschnitt der Filteranordnung überstrichen wird.

Vorzugsweise wird das Aufnahmeelement während des Messzyklus synchron zu dem Aufgabeelement bewegt, wobei stufenweise oder kontinuierlich der gesamte auf der Reingasseite befindliche Querschnitt der Filteranordnung überstrichen wird.

Ein Messzyklus kann aus Stillstandsphasen des Aufgabeelements und Bewegungsphasen des Aufgabeelements sowie aus Stillstandsphasen und Bewegungsphasen des Aufnahmeelements bestehen, wobei die Aerosolaufgabe während der Stillstandsphasen und/oder während der Bewegungsphasen erfolgt.

In vorrichtungstechnischer Hinsicht wird die zugrunde liegende Aufgabe dadurch gelöst, dass ein zweites Aufnahmeelement, das sich in Strömungsrichtung betrachtet hinter dem Aufgabeelement und in Strömungsrichtung betrachtet vor der Filteranordnung befindet und mit dem ein Teilvolumenstrom des Rohgasstroms aufnehmbar ist, sowie gekennzeichnet durch eine Messeinrichtung, mit der eine Konzentration c₁ des Testaerosols in dem Rohgasstrom bestimmbar ist. Das erfindungsgemäße Verfahren lässt sich mit einer solchen Vorrichtung auf einfache Weise durchführen. Dabei kann aus Gründen der Gleichteilverwendung die Verfahreinrichtung auf der Rohgasseite ebenso gestaltet sein wie die auf der Reingasseite bei den bekannten Scaneinrichtungen.

Wenn an mehreren Orten Testaerosol aufgegeben werden soll, kann eine mit dem Aufnahmeelement verbundene Messeinrichtung eine Messung der Partikelanzahl und daraus abgeleitet eine Bestimmung der Partikelkonzentration des Testaerosols an den der Strömungsrichtung entsprechenden Orten in dem Reingasstrom durchgeführt werden.

Das Aufgabeelement kann dabei quer zur Strömungsrichtung verschiebbar und/oder um eine zur Strömungsrichtung parallele Achse drehbar gelagert sein, wobei mit dem Aufgabeelement der gesamte auf der Rohgasseite befindliche Querschnitt der Filteranordnung überstreichbar ist.

Um zeitlich hintereinander verschiedene Orte der Filteranordnung auf ihre Effizienz zu testen, sollten das Aufgabeelement und das Aufnahmeelement synchron miteinander bewegbar sein, so dass sie stets dieselben, sich von der Rohgasseite auf die Reingasseite erstreckenden Stromlinien des Gasvolumenstroms erfassen.

Die besonderen Vorzüge der erfindungsgemäßen Vorrichtung kommen dann zum Tragen, wenn das Aufgabeelement und die dieser zugeordnete Verfahreinrichtung zwischen zwei in Reihe hintereinander geschalteten Filterstufen der Filteranordnung angeordnet sind. Hierbei liegen typischerweise im Hinblick auf den zur Verfügung stehenden Raum besonders beengte Verhältnisse vor, so dass feststehende Aufgabeelemente nicht zu einer hinreichenden Homogenisierung des Testaerosols im gesamten Filterquerschnitt führen.

Es ist gleichfalls im Rahmen der Erfindung, wenn eine oder mehrere Filterstufen der Filteranordnung aus einer oder mehreren parallel zueinander geschalteten Filterelementen vorzugsweise in Form quaderförmiger Filterzellen bestehen. Häufig werden zur Erzielung hinreichender Volumenströme mehrere Filterelemente innerhalb desselben Gehäuses parallel geschaltet, um die effektive Filterfläche zu vergrößern und gleichzeitig die Investitionskosten gering zu halten. Es kann dann innerhalb desselben Gehäuses entweder jeweils eine Verfahreinrichtung für ein Filterelement oder aber - was wesentlich effizienter ist - eine einzige Verfahreinrichtung für eine Mehrzahl von parallel geschalteten Filterelementen verwendet werden.

Eine bevorzugte konstruktive Umsetzung der Verfahreinrichtung besteht darin, dass diese eine sich über die Höhe der Filteranordnung erstreckende Linearführung aufweist, entlang der das Aufgabeelement verschiebbar ist. Dabei kann das Aufgabeelement stabförmig, insbesondere rohrförmig, mit verteilt daran angeordneten Düsen sein und sich über eine Breite der Filteranordnung erstrecken, wobei das Testaerosol im Wesentlichen über die gesamte Länge des Aufgabeelements von diesem abgebbar und somit über die gesamte Breite der Filteranordnung beaufschlagbar ist.

Die Erfindung weiter ausgestaltend ist vorgesehen, dass die Verfahreinrichtung eine drehantreibbare, in ein Filtergehäuse der Filteranordnung gelagerte Spindel und ein damit zusammen wirkendes Mutterelement aufweist, an dem das Aufgabeelement befestigt ist. Hierdurch kann eine motorische Drehbewegung leicht in eine Linearbewegung des Aufgabeelements umgesetzt werden, was insbesondere bei Filteranordnungen mit rechteckförmigem Filterquerschnitt von Vorteil ist.

Um andauernd eine Messung der Konzentration c₁ auf der Rohgasseite durchführen zu können, ist im Rahmen der Erfindung schließlich noch vorgesehen, dass das zweite Aufnahmeelement synchron mit dem Aufgabeelement über den auf der Rohgasseite befindlichen Querschnitt der Filteranordnung verfahrbar ist. Auf diese Weise kann bei der Abscheidegradbestimmung die höchste Zuverlässigkeit erzielt und mögliche Schwankungen in der Aufgabe des Testaerosols ausgeschlossen werden.

### Ausführungsbeispiel

Die Erfindung wird nachfolgend anhand zweier Ausführungsbeispiele erfindungsgemäßer Vorrichtungen, die in den Zeichnungen schematisch dargestellt sind, näher erläutert.

Es zeigt:
- Fig. 1:: einen Vertikalschnitt durch eine erfindungsgemäße Vorrichtung in einer ersten Ausführungsform
- Fig. 2:: einen Horizontalschnitt durch die Vorrichtung gemäß Figur 1 und
- Fig. 3:: einen Vertikalschnitt durch eine Vorrichtung in einer alternativen Ausführungsform.

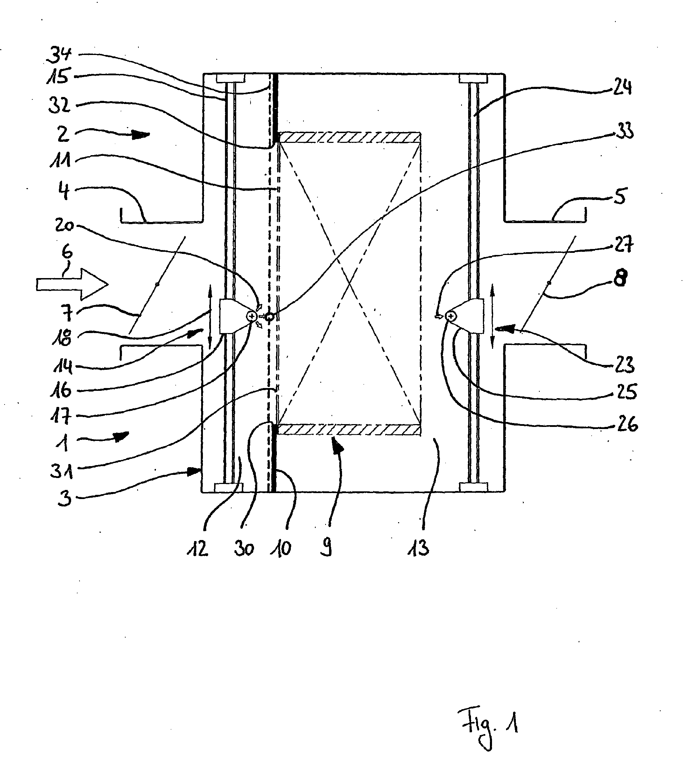

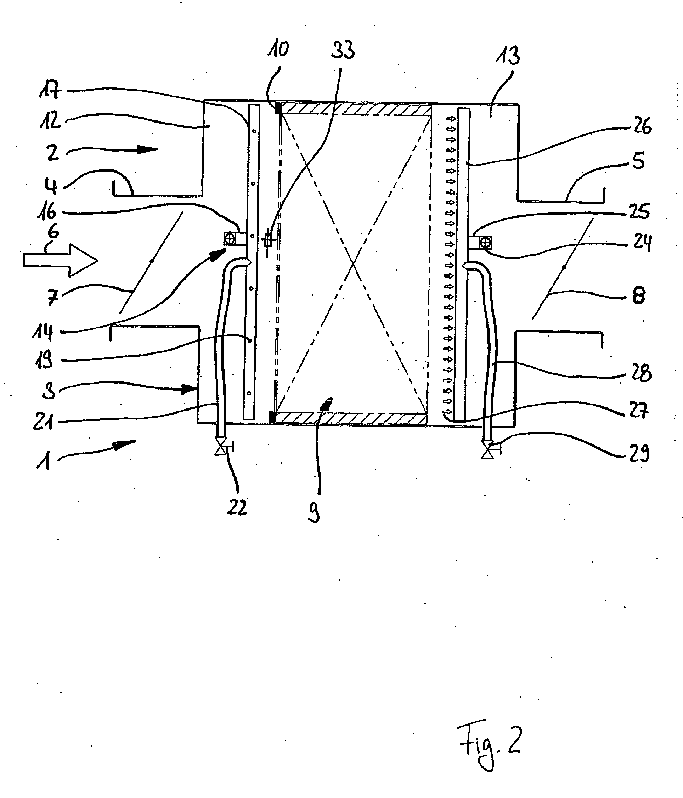

Eine in den Figuren 1 und 2 dargestellte Vorrichtung 1 umfasst eine Filteranordnung 2, die in einem im Wesentlichen quaderförmigen Filtergehäuse 3 untergebracht ist. Das Filtergehäuse 3 besitzt einen rohgasseitigen Anschlussstutzen 4 und einen reingasseitigen Anschlussstutzen 5. Die Strömungsrichtung ist durch den Pfeil 6 veranschaulicht. Sowohl im rohgasseitigen als auch im reingasseitigen Anschlussstutzen 4, 5 befindet sich jeweils eine Absperrklappe 7, 8. Im Inneren des Filtergehäuses 3 befindet sich ein Filterelement in Form einer quaderförmigen HEPA-Filterzelle. Das Filterelement 9 ist unter Zwischenschaltung bekannter Dichtungen gegen Randstreifen eines Dichtrahmens 10 gepresst, der eine dem freien Querschnitt des Filterelements 9 entsprechende Durchlassöffnung 11 besitzt.

Das Filterelement 9 und der Dichtrahmen 10, der umlaufend dicht an das Filtergehäuse 3 angeschlossen ist, unterteilen das Filtergehäuse 3 in einen Rohgasraum 12 und einen Reingasraum 13. Ein in Richtung des Pfeils 6 einströmender Gasvolumenstrom, aus dem mitgeführte Aerosole abgeschieden werden sollen, kann somit nur über das Filtermedium des Filterelements 9 von dem Rohgasraum 12 in den Reingasraum 13 und somit aus dem abströmseitigen Anschlussstutzen 5 hinaus gelangen.

In dem Rohgasraum 12 befindet sich eine Verfahreinrichtung 14 in Form einer sich über die gesamte Höhe des Filtergehäuses 3 erstreckenden Spindel 15, an der ein Mutterelement 16 befestigt ist, mit dem ein rohrförmiges Aufgabeelement 17 verbunden ist, das sich im Wesentlichen über die gesamte Breite des Filtergehäuses 3 erstreckt. Das Aufgabeelement 17 ist durch nicht gezeigte vertikale Führungen an einer Drehung um die Spindelachse gehindert, so dass bei einer durch einen nicht gezeigten Drehantrieb hervorgerufenen Rotation der Spindel 15 um ihre Achse das Mutterelement 16 zusammen mit dem Aufgabeelement 17 eine vertikale Bewegung in Richtung des Doppelpfeils 18 ausführt. Das rohrförmige Aufgabeelement ist mit einer Mehrzahl von düsenartigen Bohrungen 19 versehen, durch die aus dem Inneren des Aufgabeelements 17 heraus Testaerosol in den Rohgasraum 12 (siehe Pfeile 20 in Figur 1) abgegeben wird. Das Innere des Aufgabeelements 17 ist über eine elastische Schlauchleitung 21 mit Testaerosol aus einem Speicher versorgbar, wobei die Versorgung des Aufgabeelements 17 über ein Absperrorgan 22 unterbrechbar ist.

In dem Reingasraum 13 befindet sich ebenfalls eine Verfahreinrichtung 23, bestehend aus einer Spindel 24 und einem damit gekoppelten Mutterelement 25, das mit einem Aufnahmeelement 26 gekoppelt ist, das wie das Aufgabeelement 17 eine rohrförmige Gestalt besitzt. Das Aufnahmeelement 26 ist jedoch nicht mit düsenförmigen Bohrungen für den Einlass des das Filterelement 9 verlassenden Reingases versehen, sondern mit einem über die gesamte Breite des Filtergehäuses 3 offenen Schlitz bzw. mehreren durch Stegen getrennten Einzelschlitzen, durch den ein durch die Pfeile 27 veranschaulichter Teilvolumenstrom des Reingasstromes in das Aufnahmeelement 26 ableitbar und von dort über eine elastische Schlauchleitung 28 mit einem Absperrorgan 29 zu einer nicht dargestellten Messeinrichtung weiterleitbar ist.

In einer bevorzugten Betriebsweise wird das Aufgabeelement 17 zunächst so positioniert, dass es auf Höhe einer Unterkante 30 der Durchlassöffnung 11 positioniert ist. Auf dieselbe Höhe wird auch das Aufnahmeelement 26 zur Entnahme des Teilgasvolumenstroms zur Partikelmessung positioniert. Wird über das Aufgabeelement 17 sodann Testaerosol in den Rohgasraum 12 abgegeben, kann durch Messung des auf der Reingasseite 13 entnommenen Teilvolumenstroms die Wirksamkeit des Filters durch die dortige Partikelzählung überprüft werden. Die Überprüfung betrifft einen sich über die gesamte Breite des Filterelements 9 erstreckenden Streifen einer bestimmten Höhe, der von der Entfernung des Aufgabeelements 17 von dem Eintrittsquerschnitt 31 des Filterelements 9 sowie von Verteilwinkel des aus dem Aufgabeelement 17 austretenden Testaerosol-Volumenstroms abhängt. Anschließend wird das Aufgabeelement 17 mittels der Verfahreinrichtung 14 um einen Höhenbetrag, der der Höhe des vorgenannten Teststreifens entspricht, nach oben gefahren, um einen nächsten Teststreifen zu überprüfen. Synchron mit dem Aufgabeelement 17 wird auch das Aufnahmeelement 26 auf der Reingasseite verfahren. Diese Prozedur wird so lange fortgesetzt, bis das Aufgabeelement 17 schließlich einen Teststreifen abdeckt, der an eine Oberkante 32 der Durchlassöffnung 11 anschließt, wobei sich das Aufnahmeelement 26 zu diesem Zeitpunkt in derselben Position befindet.

Bei der zuvor beschriebenen Betriebsweise kann die Beaufschlagung mit Testaerosol während der Verfahrbewegung des Aufgabeelements 17 sowie des Aufnahmeelements 26 unterbrochen werden, sie kann jedoch auch während dieser Zeit fortgesetzt werden. Alternativ zu der schrittweisen Verfahrbewegung und dem anschließenden Stillstand des Aufgabeelements 17 sowie des Aufnahmeelements 26 während der Messphase kann auch ein hinreichend langsames kontinuierliches Verfahren sowohl des Aufgabeelements 17 als auch des Aufnahmeelements 26 durchgeführt werden.

Im Zuge eine Bestimmung eines Abscheidegrades ist erfindungsgemäß für die Ermittlung der Konzentration des Testaerosols auf der Rohgasseite ein Aufnahmeelement 33 angeordnet. Dieses kann beispielsweise stationär angeordnet sein. Das Aufnahmeelement 33 ist in Fig. 1 über eine nicht dargestellte Leitung mit einer gleichfalls nicht gezeigten Messeinrichtung verbunden, mit deren Hilfe die Partikelanzahl bzw. Konzentration des Testaerosols in dem Rohgasraum 12 ermittelt werden kann. Solange sichergestellt ist, dass die Austrittsrate des Testaerosols aus dem Aufgabeelement 17 hinreichend konstant ist, kann die an dem einen festen Ort mittels des Aufnahmeelements 33 gemessene Konzentration c₁ als konstant für die gesamte Querschnittsfläche des Filterelements 9 angesehen werden. In diesem Fall wird - wie bei der oben beschriebenen Lecktestmessung auch - im Folgenden lediglich über den gesamten Querschnitts des Filterelements 9 durch synchrones Verschieben sowohl des Aufgabeelements 17 als auch des Aufnahmeelements 26 die im Reingasstrom enthaltene Konzentration c₂ des Testaerosols ermittelt. Aus der über den gesamten Filterquerschnitt gemittelten Konzentration c₂ auf der Reingasseite und der als konstant angesetzten Konzentration c₁ auf der Rohgasseite kann sodann nach der Formel A=1-c₂/c₁ der Abscheidegrad der Filteranordnung 2 ermittelt werden.

Falls nicht von einer Konstanz der Konzentration c₁ auf der Rohgasseite ausgegangen werden soll, kann das Aufnahmeelement 33 auch synchron mit dem Aufgabeelement 17 beweglich ausgeführt sein, wozu beispielsweise eine weitere, aber vorzugsweise dieselbe Verfahreinrichtung 14 in Form der Spindel 15 verwendet werden kann. Das Mutterelement 16 ist dann so zu modifizieren, dass das Aufnahmeelement 33 in der gezeigten Position gleichfalls daran befestigt ist. Der mögliche Verfahrweg des Aufnahmeelements 33 ist in Fig. 1 durch eine gestrichelte Linie 34 veranschaulicht. Auf diese Weise kann tatsächlich in jeder Höhe die Konzentration c₂ des Testaerosols im Rohgas bestimmt werden und für jede Höhenposition ein individueller Wert des Abscheidegrades ermittelt werden, der über den gesamten Filterquerschnitt sodann noch zu mitteln ist.

Das Aufnahmeelement 33 kann - wie in Fig. 2 gezeigt - in Breitenrichtung betrachtet sehr kurz ausgeführt sein, kann sich alternativ hierzu jedoch auch wie das Aufgabeelements 17 als geschlitztes Rohr über die gesamte Breite des Filterelements 9 erstrecken.

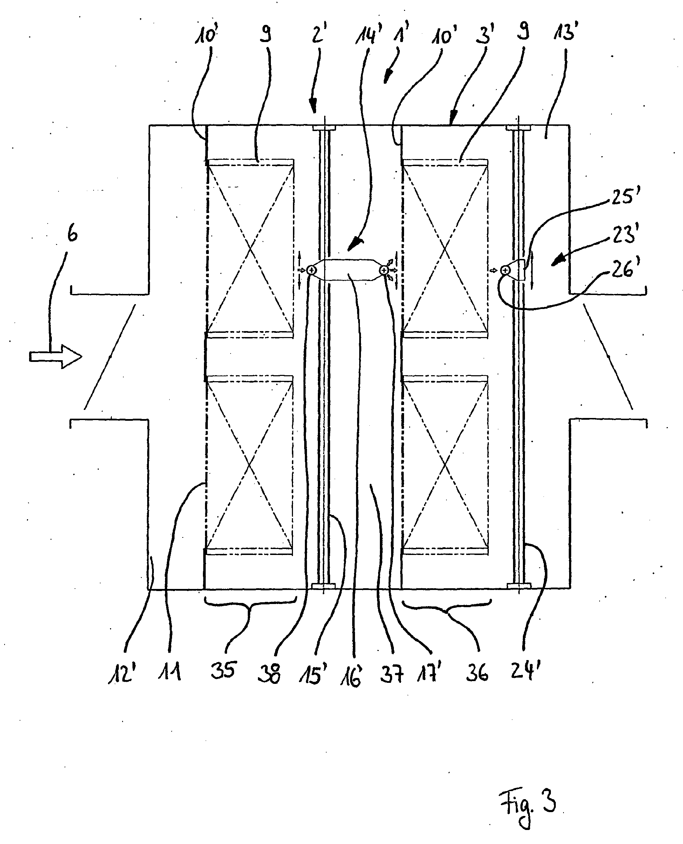

Bei der in Fig. 3 gezeigten alternativen Ausführungsform einer Vorrichtung 1' sind in einem Filtergehäuse 3' zum einen in Strömungsrichtung (Pfeil 6) zwei Filterstufen 35, 36 in Reihe hintereinander geschaltet und zum anderen in jeder Filterstufe 35, 36 zwei Filterelemente 9 vertikal gestapelt übereinander angeordnet. Zu diesem Zweck weisen beide hintereinander angeordnete Dichtrahmen 10' jeweils zwei vertikal übereinander angeordnete Durchlassöffnungen 11 aus. Die Filterelemente 9 selbst sind bei der Filteranordnung 2' gemäß Fig. 3 dieselben wie bei der Filteranordnung 2 gemäß den Fig. 1 und 2.

Um die Wirksamkeit der beiden Filterelemente 9 der zweiten Filterstufe 36 überprüfen zu können, befindet sich in einem Zwischenraum 37, der in Bezug auf die erste Filterstufe 35 der Reingasraum und in Bezug auf die zweite Filterstufe 36 der Rohgasraum ist, eine Verfahreinrichtung 14', bestehend aus einer Spindel 15' und einem Mutterelement 16', an dem analog zu der Vorrichtung gemäß den Fig. 1 und 2 ein rohrförmiges Aufgabeelement 17' befestigt ist. In analoger Weise befindet sich in dem Reingasraum 13' der zweiten Filterstufe 36 eine zweite Verfahreinrichtung 23', mit einer Spindel 24', an der ein Mutterelement 25' mit einem Aufnahmeelement 26' angeordnet ist. Trotz des sehr geringen Abstandes zwischen den beiden Filterstufen 35 und 36 lässt sich mittels des beweglichen Aufgabeelements 17' eine lokale Lecktestmessung beider Filterelemente 9 der zweiten Filterstufe 36 durchführen, wozu insbesondere das Aufgabeelement 17' synchron mit dem Aufnahmeelement 26' über die Querschnitte beider Filterelemente 9 bewegt wird.

Vorzugsweise ist das Mutterelement 16' der im Zwischenraum 37 angeordneten Verfahreinrichtung 14' noch mit einem Aufnahmeelement 38 verbunden, in dem ein Teilvolumenstrom des aus der ersten Filterstufe 35 austretenden Reingasstromes aufnehmbar und einer Messeinrichtung zuführbar ist. In Verbindung mit einer in dem Rohgasraum 12' der ersten Filterstufe 35 angeordneten Verfahreinrichtung und einem damit verbundenen Aufgabeelement für Testaerosol lässt sich auch die Wirksamkeit der ersten Filterstufe 35 überprüfen. Eine besondere Effizienz ergibt sich im vorliegenden Fall daraus, dass für die Bewegung des Aufnahmeelements 38 und des Aufgabeelements 17' im Zwischenraum 37 lediglich eine einzige Verfahreinrichtung 14' benötigt wird.

Wie bereits in Verbindung mit dem Ausführungsbeispiel gemäß den Fig. 1 und 2 erläutert, ist es für eine Bestimmung des Abscheidegrades erfindungsgemäß vorgesehen, sowohl vor Eintritt in den Filterquerschnitt der zweiten Filterstufe 36 als auch vor Eintritt in den Filterquerschnitt der ersten Filterstufe 35 jeweils eine Bestimmung der Rohgaskonzentration vorzunehmen, um in Verbindung mit den auf den jeweiligen Reingasseiten ermittelten Konzentrationen den Abscheidegrad berechnen zu können.

### Bezugszeichenliste

| | |
|---|---|
| 1, 1' | Vorrichtung |
| 2, 2' | Filteranordnung |
| 3, 3' | Filtergehäuse |
| 4 | Anschlussstutzen |
| 5 | Anschlussstutzen |
| 6 | Pfeil |
| 7 | Absperrklappe |
| 8 | Absperrklappe |
| 9 | Filterelement |
| 10, 10' | Dichtrahmen |
| 11 | Durchlassöffnung |
| 12, 12' | Rohgassraum |
| 13, 13' | Reingasraum |
| 14, 14' | Verfahreinrichtung |
| 15, 15' | Spindel |
| 16, 16' | Mutterelement |
| 17, 17' | Aufgabeelement |
| 18 | Doppelpfeil |
| 19 | Bohrung |
| 20 | Pfeil |
| 21 | Schlauchleitung |
| 22 | Absperrorgan |
| 23, 23' | Verfahreinrichtung |
| 24, 24' | Spindel |
| 25, 25' | Mutterelement |
| 26, 26' | Aufnahmeelement |
| 27 | Pfeil |
| 28 | Schlauchleitung |
| 29 | Absperrorgan |
| 30 | Unterkante |
| 31 | Eintrittsquerschnitt |
| 32 | Oberkante |
| 33 | Aufnahmeelement |
| 34 | Linie |
| 35 | Filterstufe |
| 36 | Filterstufe |
| 37 | Zwischenraum |
| 38 | Aufnahmeelement |

## Patentansprüche

1. Verfahren zur Bestimmung eines Abscheidegrades oder zur Durchführung eines Lecktests bei einer Filteranordnung (2) zur Abscheidung von Aerosolen aus einem Gasvolumenstrom, wobei ein Testaerosol mittels eines Aufgabeelements (17) in Strömungsrichtung des Gasvolumenstroms betrachtet vor der Filteranordnung (2) in einen Rohgasstrom aufgegeben wird und eine Messung einer Partikelanzahl und/oder eine Bestimmung der Partikelkonzentration in Strömungsrichtung betrachtet hinter der Filteranordnung (2) in einem Reingasstrom durchgeführt wird, wobei die Messung der Partikelanzahl und/oder die Bestimmung der Partikelkonzentration des Testaerosols mittels eines über einen Querschnitt der Filteranordnung (2) beweglichen Aufnahmeelements (26) für einen Teilvolumenstrom des Reingasstroms erfolgt, wobei das Aufgabeelement (17) für das Testaerosol quer zu der Strömungsrichtung bewegt wird, **dadurch gekennzeichnet, dass** an mindestens einem Ort in Strömungsrichtung betrachtet hinter dem Aufgabeelement (17) und in Strömungsrichtung betrachtet vor der Filteranordnung (2) ein weiteres Aufnahmeelement (33) angeordnet ist, mittels dessen eine Konzentration c₁ des Testaerosols im Rohgasstrom gemessen wird, wobei in dem Reingasstrom gleichfalls eine Messung einer Konzentration c₂ mittels des Aufnahmeelements (26) des Testaerosols erfolgt, wobei der Abscheidegrad nach der Formel A=1-c₂/c₁ bestimmt wird.

2. Verfahren nach Anspruch 1, **dadurch gekennzeichnet, dass** das Testaerosol an mehreren diskreten Orten, die verteilt über einen auf der Rohgasseite befindlichen Eintrittsquerschnitt (31) der Filteranordnung (2) verteilt sind, aufgegeben wird und für diese Orte eine Messung der Partikelanzahl und/oder eine Bestimmung der Partikelkonzentration an den entsprechenden Orten in dem Reingasstrom durchgeführt wird.

3. Verfahren nach Anspruch 1 oder 2, **dadurch gekennzeichnet, dass** das Aufgabeelement (17) quer zur Strömungsrichtung verschoben und/oder um eine zur Strömungsrichtung parallele Achse gedreht wird und vorzugsweise während eines Messzyklus der gesamte auf der Rohgasseite befindliche Querschnitt der Filteranordnung (2) überstrichen wird.

4. Verfahren nach einem der Ansprüche 1 bis 3, **dadurch gekennzeichnet, dass** das Aufnahmeelement (26) während des Messzyklus synchron zu dem Aufgabeelement (17) bewegt wird und vorzugsweise dabei den gesamten auf der Reingasseite befindlichen Querschnitt der Filteranordnung (2) überstreicht.

5. Verfahren nach einem der Ansprüche 1 bis 4, **dadurch gekennzeichnet, dass** ein Messzyklus aus Stillstandsphasen des Aufgabeelements (17) und Bewegungsphasen des Aufgabeelements (17) sowie aus Stillstandsphasen des Aufnahmeelements (26) und Bewegungsphasen des Aufnahmeelements (26) besteht, wobei die Aerosol-Aufgabe während der Stillstandsphasen und/oder während der Bewegungsphasen des Aufgabeelements (17) erfolgt.

6. Vorrichtung (1) zur Bestimmung eines Abscheidegrades oder zur Durchführung eines Lecktests bei einer Filteranordnung (2) zur Abscheidung von Aerosolen aus einem Gasvolumenstrom, mit einem Aufgabeelement (17), mit dem in Strömungsrichtung des Gasvolumenstroms betrachtet vor der Filteranordnung (2) ein Testaerosol in einen Rohgasstrom aufgebbar ist und mit einem Aufnahmeelement (26), mit dem in Strömungsrichtung des Gasvolumenstroms betrachtet hinter der Filteranordnung (2) ein Teilvolumenstrom aus einem Reingasstrom entnehmbar ist, wobei in dem Teilvolumenstrom eine Partikelanzahl messbar oder eine Partikelkonzentration des Testaerosols bestimmbar ist und wobei das Aufnahmeelement (26) mittels einer Verfahreinrichtung (23) über einen auf der Reingasseite befindlichen Querschnitt der Filteranordnung bewegbar ist, wobei das Aufgabeelement (17) mittels einer eigenen Verfahreinrichtung (14) über einen auf der Rohgasseite befindlichen Querschnitt (31) der Filteranordnung (2) bewegbar ist, **gekennzeichnet durch** ein zweites Aufnahmeelement (33), das sich in Strömungsrichtung betrachtet hinter dem Aufgabeelement (17) und in Strömungsrichtung betrachtet vor der Filteranordnung (2) befindet und mit dem ein Teilvolumenstrom des Rohgasstroms aufnehmbar ist, sowie **gekennzeichnet durch** eine Messeinrichtung, mit der eine Konzentration c₁ des Testaerosols in dem Rohgasstrom bestimmbar ist.

7. Vorrichtung nach Anspruch 6, **dadurch gekennzeichnet, dass** das Aufgabeelement (17) quer zur Strömungsrichtung verschiebbar und/oder um eine zur Strömungsrichtung parallele Achse drehbar ist und dass mit dem Aufgabeelement (17) der gesamte auf der Rohgasseite befindliche Querschnitt (31) der Filteranordnung (2) überstreichbar ist.

8. Vorrichtung nach Anspruch 6 oder 7, **dadurch gekennzeichnet, dass** das Aufgabeelement (17) und das Aufnahmeelement (26) synchron miteinander bewegbar sind, so dass sie stets dieselben sich von der Oberseite auf die Reingasseite erstreckenden Stromlinien des Gasvolumenstroms erfassen.

9. Vorrichtung nach einem der Ansprüche 6 bis 8, **dadurch gekennzeichnet, dass** das Aufgabeelement und die diesem zugeordnete Verfahreinrichtung zwischen zwei in Reihe hintereinander geschalteten Filterstufen der Filteranordnung angeordnet sind.

10. Vorrichtung nach einem der Ansprüche 6 bis 9, **dadurch gekennzeichnet, dass** ein oder mehrere Filterstufen der Filteranordnung aus einer oder mehreren parallel zueinander geschalteten Filterelementen (9), vorzugsweise in Form quaderförmiger Filterzellen, bestehen.

11. Vorrichtung nach einem der Ansprüche 6 bis 10, **dadurch gekennzeichnet, dass** die Verfahreinrichtung (14) eine sich über eine Höhe der Filteranordnung (2) erstreckende Linearführung aufweist, entlang der das Aufgabeelement (17) verschiebbar ist, wobei das Aufgabeelement (17) stabförmig ist und sich über eine Breite der Filteranordnung (2) erstreckt und wobei das Testaerosol im Wesentlichen über die gesamte Länge des Aufgabeelements (17) von diesem abgebbar und somit die gesamte Breite der Filteranordnung (2) beaufschlagbar ist.

12. Vorrichtung nach einem der Ansprüche 6 bis 11, **dadurch gekennzeichnet, dass** die Verfahreinrichtung (14, 23) eine drehantreibbare, in einem Filtergehäuse (3) der Filteranordnung (2) gelagerte Spindel (15, 24) und ein damit zusammenwirkendes Mutterelement (16, 25) aufweist, an dem das Aufgabeelement (17) befestigt ist.

13. Vorrichtung nach Anspruch 12, **dadurch gekennzeichnet, dass** das zweite Aufnahmeelement (23) synchron zu dem Aufgabeelement (17), über denen auf der Rohgasseite befindlichen Querschnitt (31) der Filteranordnung (2) verfahrbar ist.

## Claims

1. A method for determining a degree of separation and/or for carrying out a leakage test in a filter arrangement (2) for separating out aerosols from a gas volume flow, wherein a test aerosol is delivered by means of a delivery element (17) into an untreated gas flow upstream of the filter arrangement (2) as seen in the direction of flow of the gas volume flow and a measurement of a number of particles and/or a determination of the particle concentration is carried out in a clean gas flow downstream of the filter arrangement (2) as seen in the direction of flow, wherein the measurement of the number of particles and/or the determination of the particle concentration of the test aerosol is carried out by means of a receiving element (26) for a partial volume flow of the clean gas flow, said receiving element being movable over a cross-section of the filter arrangement (2), wherein the delivery element (17) for the test aerosol is moved transversely to the flow direction, **characterized in that** a further receiving element (33) is disposed at at least one site downstream of the delivery element (17) viewed in the flow direction and upstream of the filter arrangement (2) viewed in the flow direction, by means of which a concentration c₁ of the test aerosol is measured in the untreated gas flow, wherein likewise in the clean gas flow a measurement of a concentration c₂ is taken by means of the receiving element (26) of the test aerosol, wherein the degree of separation is determined using the formula A=1 - c₂/c₁.

2. The method according to claim 1, **characterized in that** the test aerosol is delivered at a plurality of discrete sites which are distributed over an intake cross-section (31) of the filter arrangement (2) and a measurement of the number of particles and/or determination of the particle concentration at the corresponding sites is carried out in the clean gas flow.

3. The method according to claim 1 or 2, **characterized in that** the delivery element (17) is moved transversely to the flow direction and/or is rotated about an axis parallel to the flow direction and the entire cross-section of the filter arrangement (2) located on the untreated gas side is preferably coated during a measuring cycle.

4. The method according to one of the claims 1 to 3, **characterized in that** the receiving element (26) is moved synchronously to the delivery element (17) during the measuring cycle and the entire cross-section of the filter arrangement (2) located on the clean gas side is preferably coated during this.

5. The method according to one of the claims 1 to 4, **characterized in that** a measuring cycle comprises stationary phases of the delivery element (17) and moving phases of the delivery element (17) and also stationary phases of the receiving element (26) and moving phases of the receiving element (26), wherein the aerosol delivery takes place during the stationary phases and/or during the moving phases of the delivery element (17).

6. A device (1) for determining a degree of separation or for carrying out a leakage test in a filter arrangement (2) for separating out aerosols from a gas volume flow, having a delivery element (17), with which a test aerosol can be delivered into an untreated gas flow upstream of the filter arrangement (2) as seen in the direction of flow of the gas volume flow, and having a receiving element (26), with which a partial volume flow can be removed from a clean gas flow downstream of the filter arrangement (2) as seen in the direction of flow of the gas volume flow, wherein a particle number can be measured or a particle concentration of the test aerosol determined in the partial volume flow and wherein the receiving element (26) can be moved over a cross-section of the filter arrangement located on the clean gas side by means of a travelling mechanism (23), wherein the delivery element (17) can be moved over a cross-section (31) of the filter arrangement (2) located on the untreated gas side by means of its own travelling mechanism (14), **characterized by** a second receiving element (33), which is located downstream of the delivery element (17) viewed in the flow direction and upstream of the filter arrangement (2) viewed in the flow direction and with which a partial volume flow of the untreated gas flow can be received, and also **characterized by** a measuring device, with which a concentration c₁ of the test aerosol can be determined in the untreated gas flow.

7. The device according to claim 6, **characterized in that** the delivery element (17) can be moved transversely to the flow direction and/or is rotatable about an axis parallel to the flow direction and that the entire cross-section (31) of the filter arrangement (2) located on the untreated gas side can be coated using the delivery element (17).

8. The device according to claim 6 or 7, **characterized in that** the delivery element (17) and the receiving element (26) can be moved synchronously with one another, so that they constantly cover flow lines of the gas volume flow extending from the upper side to the clean gas side.

9. The device according to one of the claims 6 to 8, **characterized in that** the delivery element and the travelling mechanism assigned thereto are arranged between two filter stages of the filter arrangement connected in series one after another.

10. The device according to one of the claims 6 to 9, **characterized in that** one or a plurality of filter stages of the filter arrangement comprises one or a plurality of filter elements (9) connected in parallel to one another, preferably in the form of cuboid filter cells.

11. The device according to one of the claims 6 to 10, **characterized in that** the travelling mechanism (14) exhibits a linear guide extending over a height of the filter arrangement (2), along which linear guide the delivery element (17) can be moved, wherein the delivery element (17) is rod-shaped and extends over a width of the filter arrangement (2) and wherein the test aerosol can be delivered by the delivery element (17) substantially over the entire length thereof and therefore the entire width of the filter arrangement (2) can be treated.

12. The device according to one of the claims 6 to 11, **characterized in that** the travelling mechanism (14, 23) exhibits a spindle (15, 24) capable of being driven in a rotary manner mounted in a filter housing (3) of the filter arrangement (2) and a nut element (16, 25) interacting therewith, to which the delivery element (17) is attached.

13. The device according to claim 12, **characterized in that** the second receiving element (23) is movable synchronously with the delivery element (17), via which the cross-section (31) located on the untreated gas side of the filter arrangement (2) can be moved over.

## Revendications

1. Procédé destiné à déterminer un taux de séparation ou à réaliser un essai de fuite chez un système de filtration (2) permettant de séparer des aérosols à partir d'un flux volumique de gaz, consistant à introduire un aérosol d'essai dans un flux de gaz brut au moyen d'un élément d'introduction (17) situé en amont du système de filtration (2) selon le sens d'écoulement dudit flux volumique de gaz et à réaliser, en aval du système de filtration (2) selon ledit sens d'écoulement, une mesure d'un nombre de particules et/ou une détermination de la concentration de particules dans un flux de gaz purifié, ladite mesure du nombre de particules et/ou ladite détermination de la concentration de particules dudit aérosol d'essai étant réalisées au moyen d'un élément de réception (26) qui est destiné à un flux volumique partiel dudit flux de gaz purifié et qui peut être déplacé à travers une section transversale du système de filtration (2), l'élément (17 destiné à introduire ledit aérosol d'essai étant déplacé transversalement audit sens d'écoulement, **caractérisé en ce qu'**un autre élément de réception (33) est disposé à au moins un endroit situé en aval de l'élément d'introduction (17) selon ledit sens d'écoulement et en amont du système de filtration (2) selon ledit sens d'écoulement, permettant de mesurer dans ledit flux de gaz brut une concentration c₁ de l'aérosol d'essai tout en réalisant dans ledit flux de gaz purifié une mesure d'une concentration c₂ de l'aérosol d'essai au moyen de l'élément de réception (26), le taux de séparation étant déterminé selon la formule A = 1-c₂/c₁.

2. Procédé selon la revendication 1, **caractérisé en ce que** ledit aérosol d'essai est introduit à plusieurs endroits discrets qui sont répartis sur une section transversale d'entrée (31) du système de filtration (2) qui est située sur le côté gaz brut et qu'on réalise, pour lesdits endroits, une mesure du nombre de particules et/ou une détermination de la concentration de particules aux endroits correspondants dans ledit flux de gaz purifié.

3. Procédé selon les revendications 1 ou 2, **caractérisé en ce que** l'élément d'introduction (17) est déplacé transversalement audit sens d'écoulement et/ou subit une rotation autour d'un axe qui est parallèle audit sens d'écoulement, de manière à couvrir préférentiellement pendant un cycle de mesure l'intégralité de la coupe transversale du système de filtration (2) située sur le côté gaz brut.

4. Procédé selon l'une des revendications 1 à 3, **caractérisé en ce que** l'élément de réception (26) est déplacé pendant ledit cycle de mesure de manière synchronisée avec l'élément d'introduction (17), ce déplacement couvrant préférentiellement l'intégralité de la coupe transversale du système de filtration (2) située sur le côté gaz purifié.

5. Procédé selon l'une des revendications 1 à 4, **caractérisé en ce qu'**un cycle de mesure est constitué de phases d'arrêt de l'élément d'introduction (17) et de phases de déplacement de l'élément d'introduction (17) ainsi que de phases d'arrêt de l'élément de réception (26) et de phases de déplacement de l'élément de réception (26), l'introduction de l'aérosol étant réalisée pendant lesdites phases d'arrêt et/ou pendant lesdites phases de déplacement de l'élément de réception (17).

6. Dispositif (1) destiné à déterminer un taux de séparation ou à réaliser un essai de fuite chez un système de filtration (2) permettant de séparer des aérosols à partir d'un flux volumique de gaz, comportant un élément d'introduction (17) permettant d'introduire en amont du système de filtration (2) selon le sens d'écoulement dudit flux volumique de gaz un aérosol d'essai dans un flux de gaz brut, et un élément de réception (26) permettant de prélever, en aval du système de filtration (2) selon le sens d'écoulement dudit flux volumique de gaz, un flux volumique partiel dans un flux de gaz purifié, ledit flux volumique partiel pouvant subir une mesure d'un nombre de particules ou une détermination d'une concentration de particules dudit aérosol d'essai et l'élément de réception (26) pouvant être déplacé, au moyen d'un dispositif de déplacement (23), à travers une coupe transversale du système de filtration située sur le côté gaz purifié, l'élément d'introduction (17) pouvant être déplacé, au moyen de son propre dispositif de déplacement (14) à travers une coupe transversale (31) du système de filtration (2) située sur le côté gaz brut, **caractérisé par** un deuxième élément de réception (33) qui se trouve en aval de l'élément d'introduction (17) selon ledit sens d'écoulement et en amont du système de filtration (2) selon ledit sens d'écoulement et qui permet de recevoir un flux volumique partiel du flux de gaz brut, ainsi que **caractérisé par** un dispositif de mesure permettant de déterminer une concentration c₁ dudit aérosol d'essai dans le flux de gaz brut.

7. Dispositif selon la revendication 6, **caractérisé en ce que** l'élément d'introduction (17) peut être déplacé transversalement audit sens d'écoulement et/ou subir une rotation autour d'un axe qui est parallèle à audit sens d'écoulement et que l'élément d'introduction (17) permet de couvrir l'intégralité de la coupe transversale (31) du système de filtration (2) située sur le côté gaz brut.

8. Dispositif selon les revendications 6 ou 7, **caractérisé en ce que** l'élément d'introduction (17) et l'élément de réception (26) peuvent subir ensemble un déplacement synchronisé, de manière à ce qu'ils couvrent toujours les mêmes lignes de courant dudit flux volumique de gaz lesquelles s'étendent de la face supérieure vers le côté gaz purifié.

9. Dispositif selon l'une des revendications 6 à 8, **caractérisé en ce que** ledit élément d'introduction et le dispositif de déplacement lui étant associé sont disposés entre deux étages de filtration du système de filtration qui sont disposés l'un derrière l'autre en série.

10. Dispositif selon l'une des revendications 6 à 9, **caractérisé en ce qu'**un ou plusieurs étages de filtration dudit système de filtration sont constitués d'un ou de plusieurs élément de filtration (9) qui sont disposés parallèlement les uns aux autres et qui se présentent préférentiellement sous forme de cellules de filtrage parallélépipédiques.

11. Dispositif selon l'une des revendications 6 à 10, **caractérisé en ce que** le dispositif de déplacement (14) présente un guidage linéaire s'étendant à travers une hauteur du système de filtration (2) et permettant d'y déplacer l'élément d'introduction (17), l'élément d'introduction (17) ayant la forme d'une barre et s'étendant à travers une largeur du système de filtration (2), et ledit aérosol d'essai pouvant être libéré à partir de sensiblement toute la longueur de l'élément d'introduction (17), le système de filtration(2) pouvant ainsi y être exposé sur toute sa largeur.

12. Dispositif selon l'une des revendications 6 à 11, **caractérisé en ce que** le dispositif de déplacement (14, 23) comporte une tige (15, 24), montée dans un boîtier à filtres (3) du système de filtration (2) et pouvant être entraînée en rotation, et un élément d'écrou (16, 25) lequel entre en coopération avec cette première et auquel l'élément d'introduction (17) est fixé.

13. Dispositif selon la revendication 12, **caractérisé en ce que** le deuxième élément de réception (23) peut être déplacé de manière synchronisée avec l'élément d'introduction (17) à travers la coupe transversale (31) du système de filtration (2) située sur le côté gaz brut.
